# FASCICULE DE BREVET EUROPEEN

(11) **EP 2 791 406 B1**
(45) Date de publication et mention de la délivrance du brevet: **12.10.2016**
(21) Numéro de dépôt: 12821288.3
(22) Date de dépôt: 10.12.2012
(51) Int. Cl.: D03D 25/00, B29C 70/24, F01D 5/28

(54) **STRUCTURE FIBREUSE AVEC FILS A TITRE VARIABLE**
FASERSTRUKTUR MIT FÄDEN VON VARIABLER FEINHEIT
FIBER STRUCTURE HAVING VARIABLE-COUNT THREADS

(30) Priorité: 14.12.2011 US 201161570386 P
(43) Date de publication de la demande: 22.10.2014
(73) Titulaire: SNECMA, 75015 Paris (FR)
(72) Inventeur: DAMBRINE, Bruno, Jacques, Gérard, F-77820 Le Chatelet en Brie (FR); COUPE, Dominique, Medford, Massachusetts 02155 (US); GOERING, Jonathan, York, Maine 03909 (US); GILBERTSON, Brock, Dover, New Hampshire 03820 (US); MAHIEU, Jean-Noël, F-75014 Paris (FR)
(74) Mandataire: Desormiere, Pierre-Louis
(86) Numéro de dépôt international: PCT/FR2012/052852
(87) Numéro de publication internationale: WO 2013/088039

(56) Documents cités:
- EP-A1- 1 526 285
- JP-A- H09 157 993
- US-A1- 2011 176 927

## Description

### Arrière-plan de l'invention

La présente invention concerne la réalisation de pièces en matériau composite et plus particulièrement la réalisation de structures fibreuses de renfort pour de telles pièces.

Un domaine d'application de l'invention est plus particulièrement la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

Dans le cadre de la réalisation de structures fibreuses par tissage multicouche destinées à constituer le renfort fibreux d'une pièce en matériau composite, telle qu'une aube de moteur aéronautique, on doit retirer au cours du tissage de la structure des fils à la fois dans le sens chaîne et dans le sens trame pour respecter les diminutions d'épaisseurs dans la pièce, comme par exemple au niveau de l'échasse ou du bord de fuite de l'aube, afin d'obtenir une préforme fibreuse qui présente la forme et les dimensions quasi-définitives de l'aube (« net shape »).

Dans les portions de la structure fibreuse comprenant un nombre important de couches de fils, le retrait de fils a peu d'influence sur la variation du taux de fibres qui reste relativement constant. Cependant, dès que le nombre de couches diminue de façon significative, par exemple lorsqu'il ne reste plus que 4 couches ou moins de fils de trame ou de chaîne, la variation du taux de fibres devient trop importante lorsqu'on retire à nouveau une couche de fils.

Un structure fibreuse selon le préambule de la revendication 1 et un procédé selon le préambule de la revendication 12 sont connu du document EP 1 526 285 A1. 30

### Objet et résumé de l'invention

Il est donc souhaitable de pouvoir disposer de structures fibreuses ayant la forme et les dimensions quasi-définitives de la pièce en matériau composite à réaliser, en particulier au niveau de portions d'épaisseur décroissantes, et ce tout en ayant un taux de variation de fibres minimal dans ces portions.

A cet effet, selon l'invention, il est proposé une structure fibreuse de renfort de pièce en matériau composite, ladite structure étant tissée en une seule pièce par tissage multicouche entre une première pluralité de couches de fils s'étendant dans une première direction et une deuxième pluralité de couches de fils s'étendant dans une seconde direction,
caractérisée en ce qu'au moins une des première et deuxième pluralités de couches de fils comprend au moins une couche de fils à titre variable, chaque fil à titre variable étant formé d'un assemblage séparable de fils unitaires ayant chacun un titre déterminé,
et en ce que la structure fibreuse comprend au moins une portion d'épaisseur réduite dans laquelle les fils à titre variable présentent un titre inférieur à celui présenté par lesdits fils à titre variable avant ladite portion d'épaisseur réduite.

Grâce à l'utilisation de fils à titre variable, il est possible d'ajuster le titre des fils en fonction de la diminution du nombre de couches de fils dans les portions d'épaisseurs réduites de la structure et de contrôler ainsi la variation du taux de fibre afin que celle-ci soit minimale. En effet, les fils unitaires composant les fils à titre variable peuvent être extraits progressivement de la structure fibreuse, ce qui permet d'éviter ainsi une brusque variation du taux de fibres, en particulier dans les portions d'épaisseurs réduites comportant un faible nombre de couches de fils.

Selon un aspect particulier de l'invention, le titre de chaque fil unitaire d'un fil à titre variable est un diviseur du titre dudit fil à titre variable.

Selon un autre aspect de l'invention, les fils à titre variable sont choisis parmi au moins un des types de fils suivants : fils retors, fils assemblés et fils guipés.

Selon encore un autre aspect de l'invention, chaque fil à titre variable a un titre initial de 48k et en ce qu'il est formé par un des assemblages séparables de fils unitaires suivants :
- deux fils unitaires ayant chacun un titre de 24k,
- trois fils unitaires dont un a un titre de 24k et les deux autres ont un titre de 12k, et
- quatre fils unitaires ayant chacun un titre de 12k.

Selon une caractéristique particulière de l'invention, dans la portion d'épaisseur réduite, la structure fibreuse comprend trois couches de la première pluralité de couches de fils et deux couches de la deuxième pluralité de couches de fils.

Selon une autre caractéristique particulière de l'invention, la portion d'épaisseur réduite comprend au moins une zone à partir de laquelle une couche de la première ou deuxième pluralité de couches de fils est interrompue, ladite couche de fils interrompue étant remplacée dans la suite de la portion d'épaisseur réduite par des fils unitaires d'une couche de fils à titre variable adjacente à ladite couche interrompue.

L'invention a également pour objet une pièce en matériau composite comprenant une structure fibreuse selon l'invention densifiée par une matrice. Cette pièce pouvant notamment constituer une aube de moteur aéronautique.

L'invention a également pour objet un turbopropulseur équipé d'une pluralité d'aubes selon l'invention.

L'invention vise encore un aéronef équipé d'au moins un turbopropulseur selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique illustrant le tissage multicouche d'une structure fibreuse pour la fabrication d'une aube de moteur aéronautique conformément à un mode de réalisation de l'invention,
- les figures 2A à 2H représentent 8 plans d'armure successifs en coupe trame d'une partie de la structure fibreuse de la figure 1 destinée à former le bord de fuite de l'aube à réaliser selon un mode de réalisation de l'invention,

- les figures 3A à 3H représentent 8 plans d'armure successifs en coupe trame d'une partie de la structure fibreuse de la figure 1 destinée à former le bord de fuite de l'aube à réaliser selon un autre mode de réalisation de l'invention,
- les figures 4A à 4H représentent 8 plans d'armure successifs en coupe trame d'une partie de la structure fibreuse de la figure 1 destinée à former le bord de fuite de l'aube à réaliser selon un autre mode de réalisation de l'invention,
- les figures 5A à 5H représentent 8 plans d'armure successifs en coupe trame d'une partie de la structure fibreuse de la figure 1 destinée à former le bord de fuite de l'aube à réaliser selon un autre mode de réalisation de l'invention,
- la figure 6 est une vue schématique en perspective d'une préforme fibreuse d'aube issue de la structure fibreuse de la figure 1,
- la figure 7 est une vue schématique en perspective d'une aube en matériau composite obtenue par densification par une matrice de la préforme de la figure 6.

### Description détaillée de modes de réalisation

L'invention s'applique d'une manière générale à la réalisation de structures fibreuses aptes à constituer des renforts fibreux, ou préformes, pour la fabrication de pièces en matériau composite, en particulier des aubes de moteurs aéronautiques, les pièces étant obtenues par densification des structures fibreuses par une matrice. La matrice est typiquement une résine, dans le cas de matériaux composites utilisés à température relativement peu élevée, typiquement jusqu'à 300°C, ou un matériau réfractaire tel que du carbone ou céramique dans le cas de composites thermostructuraux.

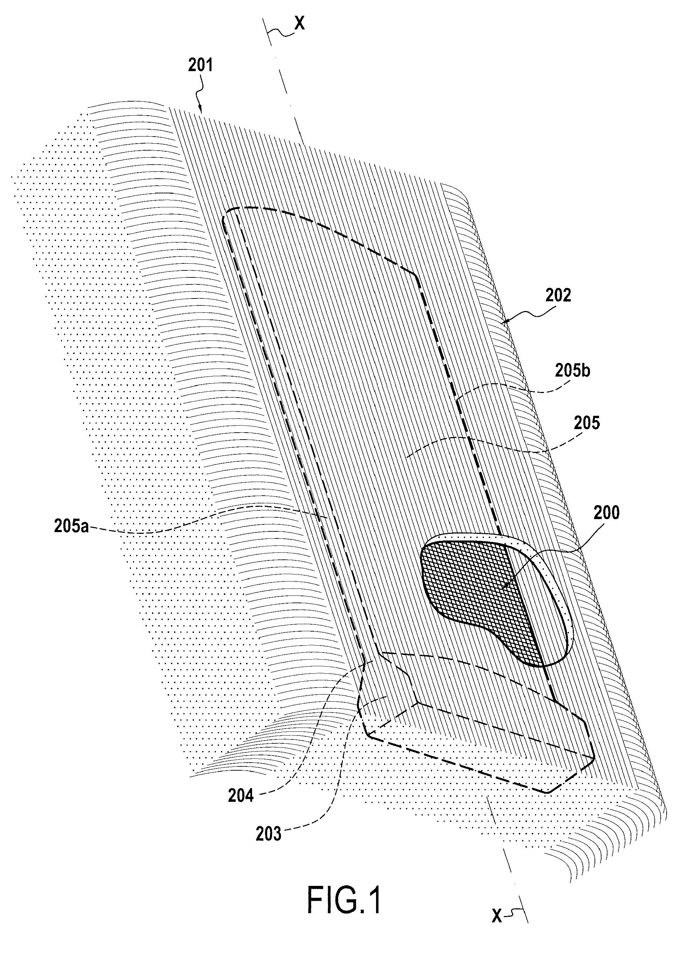

La figure 1 montre très schématiquement une structure fibreuse 200 destinée à former le renfort fibreux d'une aube de moteur aéronautique.

La structure fibreuse 200 est obtenue par tissage multicouche réalisé de façon connue au moyen d'un métier à tisser de type jacquard sur lequel on a disposé un faisceau de fils de chaînes ou torons 201 en une pluralité de couches, les fils de chaînes étant liés par des fils de trame 202 également disposés en une pluralité de couches.

La structure fibreuse 200 est tissée sous forme d'une bande s'étendant de façon générale dans une direction X correspondant à la direction longitudinale de l'aube à réaliser. La structure fibreuse présente une épaisseur variable déterminée en fonction de l'épaisseur longitudinale et de profil de la pale de l'aube à réaliser. Dans sa partie destinée à former une préforme de pied, la structure fibreuse 200 présente une surépaisseur 203 déterminée en fonction de l'épaisseur du pied de l'aube à réaliser et qui peut être réalisée en utilisant par exemple des fils de titre plus important ou un insert. La structure fibreuse 200 se prolonge par une portion d'épaisseur décroissante 204 destinée à former l'échasse de l'aube puis par une partie 205 destinée à former la pale de l'aube. La partie 205 présente dans une direction perpendiculaire à la direction X un profil à épaisseur variable entre son bord 205a destiné à former le bord d'attaque de l'aube et son bord 205b destiné à former le bord de fuite de l'aube à réaliser.

Des exemples détaillés de réalisation d'une préforme fibreuse destinée à former le renfort fibreux d'une aube pour moteur aéronautique est notamment décrit en détail dans les documents US 7 101 154, US 7 241 112 et WO 2010/061140 dont le contenu est incorporé ici par voie de référence.

Dans les exemples décrits ci-après, les faces externes ou peaux de la structure fibreuse sont réalisées avec une armure de type satin tandis que la partie interne de la structure est réalisée avec une armure de type « interlock » comme décrit dans le document WO 2006/136755 dont le contenu est incorporé ici par voie de référence. Par armure « interlock », on entend ici une armure de tissage dans laquelle chaque couche de fils de chaîne lie plusieurs couches de fils de trame avec tous les fils d'une même colonne de chaîne ayant le même mouvement dans le plan de l'armure.

La structure fibreuse selon l'invention peut être tissée notamment, mais non exclusivement, à partir de fils de fibres de carbone ou de céramique tel que du carbure de silicium. Le taux de fibres dans la structure fibreuse est déterminé localement en fonction de la densité de fils présents à l'endroit de la structure considéré.

La structure fibreuse 200 est tissée en une seule pièce et doit présenter, après découpe des fils non tissés, la forme et les dimensions quasi-définitives de l'aube (« net shape »). A cet effet, dans les parties de réduction d'épaisseur de la structure fibreuse, comme dans la portion située entre les bords 205a et 205b de la structure, la diminution d'épaisseur de la préforme est obtenue en retirant progressivement des couches de fils de chaîne et de trame au cours du tissage.

Conformément à l'invention, la structure fibreuse est tissée avec des fils dont au moins une partie sont des fils dits « à titre variable », c'est-à-dire des fils qui sont constitués d'un assemblage séparable de fils unitaires ayant chacun un titre déterminé, l'addition des titres de tous les fils unitaires constituant un fil à titre variable donnant le titre initial de ce dernier.

Le titre ou titrage d'un fil correspond à la grosseur de celui-ci (selon le type de matière du fil, la densité varie, donc le volume occupé pour une même masse sera différent) et peut être défini de plusieurs façons. Il peut être notamment défini par la masse linéique du fil (masse par unité de longueur) qui s'exprime généralement en tex correspondant à la masse en grammes de 1000 mètres de fil ou en décitex (dtx) correspondant à la masse (en grammes) de 10000 mètres de fil. Le titre d'un fil peut être également défini par le nombre de filaments qui le compose. Dans ce cas, le titre du fil s'exprime en « K » qui correspond au nombre en millier de filaments par fil. Par exemple, un fil de 1K comprend 1000 filaments. D'autres unités de mesure peuvent être encore utilisées pour indiquer le titre d'un fil comme, par exemple, le numéro métrique (Nm) exprimant le nombre de mètres au gramme pour un fil.

Dans la présente invention, l'assemblage des fils unitaires formant un fil à titre variable peut être réalisé de différentes façons. Le fil à titre variable peut être notamment un fil assemblé résultant de la réunion sans torsion notable de plusieurs fils unitaires.

La diminution du titre des fils à titre variable est avantageusement mise en oeuvre lors de la diminution de l'épaisseur de la structure fibreuse par retrait de couche de fils afin de minimiser la variation du taux de fibres dans ces portions d'épaisseur réduite. La diminution du titre des fils à titre variable est de préférence mise en oeuvre lorsque la structure fibreuse ne comprend plus que 4 couches (trame ou chaîne) ou moins. Cette diminution peut être appliquée indifféremment à des fils de chaîne, des fils de trame, ou à la fois à des fils de chaîne et de trame. L'endroit de la texture fibreuse à partir duquel on diminue le titre d'un fil à titre variable est indépendant de l'endroit où l'on retire la couche de fils (chaîne ou trame) pour affiner la structure.

Comme expliqué ci-après, les fils à titre variable peuvent être utilisés pour réaliser une sortie progressive de la structure fibreuse des fils d'une couche de fils. Les fils à titre variable peuvent aussi être utilisés pour remplacer les fils d'une couche adjacente qui a été entièrement sortie de la structure fibreuse, une partie des fils unitaires de fils à titre variable étant conservé dans la couche à laquelle ils appartiennent initialement pour poursuivre le tissage de cette couche, l'autre partie des fils unitaires étant déviée pour poursuivre le tissage de la couche adjacente extraite de la structure.

Des exemples de réalisation d'une structure fibreuse destinée à former un renfort pour une aube en matériau composite conformément à l'invention sont décrits ci-après. Dans tous ces exemples, le tissage est réalisé sur un métier à tisser de type Jacquard.

### Exemple 1

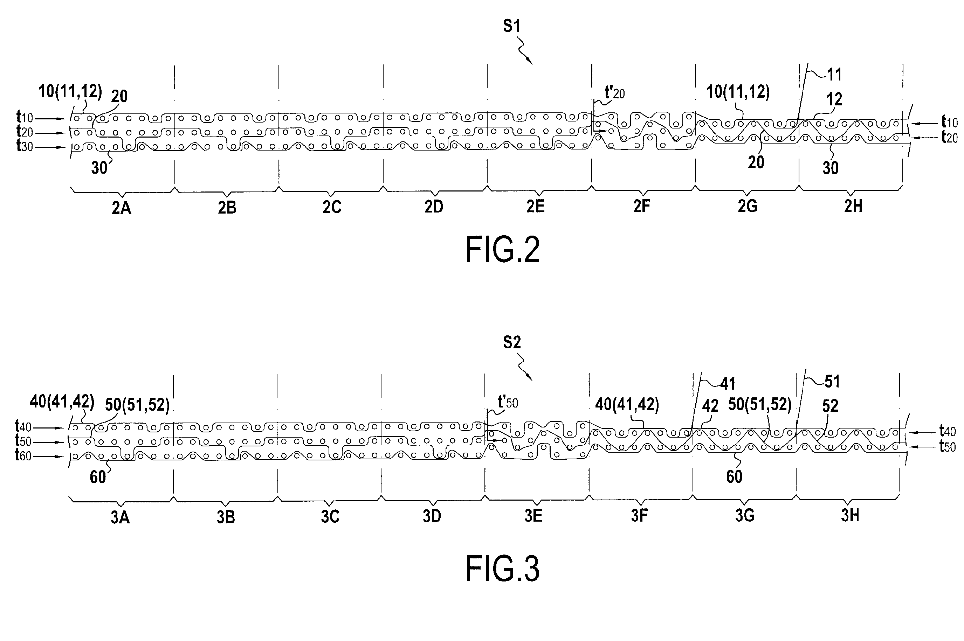

Les figures 2A à 2H représentent 8 plans d'armure successifs d'une partie d'une structure fibreuse S1 obtenue par tissage multicouche, les fils de trame étant visibles en coupe. La partie de la structure fibreuse S1 représentée correspond à la partie du renfort fibreux située au niveau du bord de fuite de l'aube en matériau composite, comme la partie 205b de la structure fibreuse 200 de la figure 1. Les 8 plans d'armure représentés sur les figures 2A à 2H correspondent à 8 stades de l'évolution successifs dans l'armure de la structure S1. Ces 8 plans ne définissent pas entièrement l'armure de la structure S1.

Dans les figures 2A à 2E, la structure fibreuse comprend 3 couches de fils de trame t10, t20 et t30. Dans la figure 2F, on retire une demi-couche de la couche t20 pour ne laisser dans la structure S1 que la demi-couche t'20. Dans les figures 2G à 2H, on retire la demi-couche t'20 pour ne laisser que les 2 couches t10 et t30 dans la structure S1.

Dans les plans représentés sur les figures 2A à 2H, les couches ou demi-couches de fils de trame sont tissées avec trois fils de chaîne 10, 20, 30, les fils de chaîne 10 et 30 étant tissés suivant une armure de type satin et le fil de chaîne 20 étant tissé suivant une armure de type interlock. Les fils de chaîne 20 et 30 sont des fils ayant un titre de 48K tandis que le fil de chaîne 10 est un fil à titre variable formé d'un assemblage séparable de deux fils unitaires 11 et 12 ayant chacun un titre de 24K.

Dans la figure 2G, le fil unitaire 11 du fil à titre variable 10 est extrait de la structure S1, le tissage étant poursuivi avec l'autre fil unitaire 12 de 24K.

### Exemple 2

Les figures 3A à 3H représentent 8 plans d'armure successifs d'une partie d'une structure fibreuse S2 obtenue par tissage multicouche, les fils de trame étant visibles en coupe. La partie de la structure fibreuse S2 représentée correspond à la partie du renfort fibreux située au niveau du bord de fuite de l'aube en matériau composite, comme la partie 205b de la structure fibreuse 200 de la figure 1. Les 8 plans d'armure représentés sur les figures 3A à 3H correspondent à 8 stades de l'évolution successifs dans l'armure de la structure S2. Ces 8 plans ne définissent pas entièrement l'armure de la structure S2.

Dans les figures 3A à 3D, la structure fibreuse comprend 3 couches de fils de trame t40, t50 et t60. Dans la figure 3E, on retire une demi-couche de la couche t50 pour ne laisser dans la structure S2 que la demi-couche t'50. Dans les figures 3F à 3H, on retire la demi-couche t'50 pour ne laisser que les 2 couches t40 et t60 dans la structure S2.

Dans les plans représentés sur les figures 3A à 3H, les couches ou demi-couches de fils de trame sont tissées avec trois fils de chaîne 40, 50, 60, les fils de chaîne 40 et 60 étant tissés suivant une armure de type satin et le fil de chaîne 50 étant tissé suivant une armure de type interlock. Les fils de chaîne 40 et 50 sont des fils à titre variable formés chacun d'un assemblage séparable de deux fils unitaires 41 et 42, respectivement 51 et 52, ayant chacun un titre de 24K. Le fil de chaîne 60 est un fil ayant un titre de 48K.

Dans la figure 3F, le fil unitaire 41 du fil à titre variable 40 est extrait de la structure S2, le tissage étant poursuivi avec l'autre fil unitaire 42 de 24K. Dans la figure 3F, le fil unitaire 41 du fil à titre variable 40 est extrait de la structure S2, le tissage étant poursuivi avec l'autre fil unitaire 42 de 24K. Dans la figure 3G, le fil unitaire 51 du fil à titre variable 50 est extrait de la structure S2, le tissage étant poursuivi avec l'autre fil unitaire 52 de 24K.

### Exemple 3

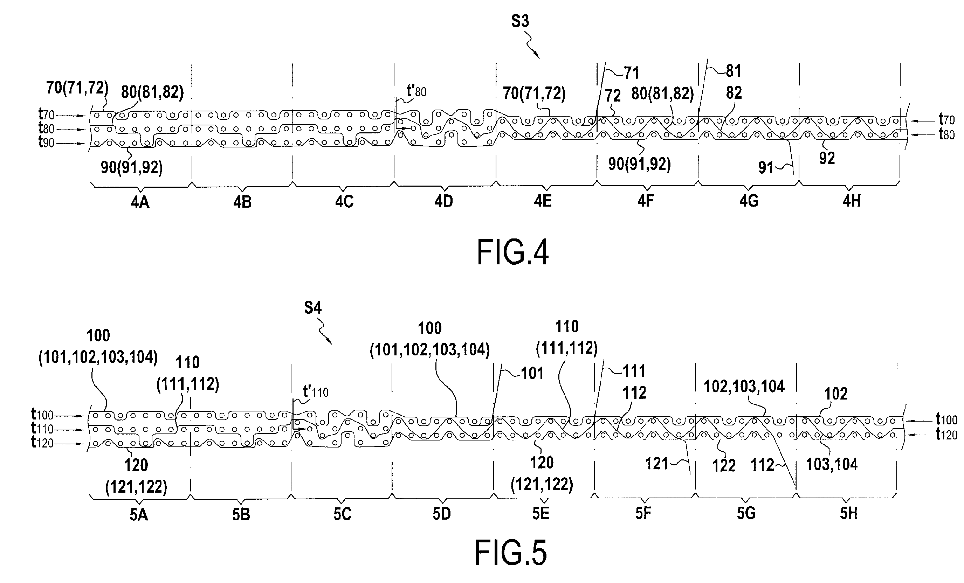

Les figures 4A à 4H représentent 8 plans d'armure successifs d'une partie d'une structure fibreuse S3 obtenue par tissage multicouche, les fils de trame étant visibles en coupe. La partie de la structure fibreuse S3 représentée correspond à la partie du renfort fibreux située au niveau du bord de fuite de l'aube en matériau composite, comme la partie 205b de la structure fibreuse 200 de la figure 1. Les 8 plans d'armure représentés sur les figures 4A à 4H correspondent à 8 stades de l'évolution successifs dans l'armure de la structure S3. Ces 8 plans ne définissent pas entièrement l'armure de la structure S3.

Dans les figures 4A à 4C, la structure fibreuse comprend 3 couches de fils de trame t70, t80 et t90. Dans la figure 4D, on retire une demi-couche de la couche t80 pour ne laisser dans la structure S3 que la demi-couche t'80. Dans les figures 4E à 4H, on retire la demi-couche t'80 pour ne laisser que les 2 couches t70 et t90 dans la structure S3.

Dans les plans représentés sur les figures 4A à 4H, les couches ou demi-couches de fils de trame sont tissées avec trois fils de chaîne 70, 80, 90, les fils de chaîne 70 et 90 étant tissés suivant une armure de type satin et le fil de chaîne 80 étant tissé suivant une armure de type interlock. Les fils de chaîne 70, 80 et 90 sont des fils à titre variable formés chacun d'un assemblage séparable de deux fils unitaires 71 et 72, respectivement 81 et 22, et respectivement 91 et 92, ayant chacun un titre de 24K.

Dans la figure 4E, le fil unitaire 71 du fil à titre variable 70 est extrait de la structure S3, le tissage étant poursuivi avec l'autre fil unitaire 72 de 24K. Dans la figure 4F, le fil unitaire 81 du fil à titre variable 80 est extrait de la structure S3, le tissage étant poursuivi avec l'autre fil unitaire 82 de 24K. Dans la figure 4G, le fil unitaire 91 du fil à titre variable 90 est extrait de la structure S3, le tissage étant poursuivi avec l'autre fil unitaire 92 de 24K.

### Exemple 4

Les figures 5A à 5H représentent 8 plans d'armure successifs d'une partie d'une structure fibreuse S4 obtenue par tissage multicouche, les fils de trame étant visibles en coupe. La partie de la structure fibreuse S4 représentée correspond à la partie du renfort fibreux située au niveau du bord de fuite de l'aube en matériau composite, comme la partie 205b de la structure fibreuse 200 de la figure 1. Les 8 plans d'armure représentés sur les figures 5A à 5H correspondent à 8 stades de l'évolution successifs dans l'armure de la structure S4. Ces 8 plans ne définissent pas entièrement l'armure de la structure S4.Dans les figures 5A et 5B, la structure fibreuse comprend 3 couches de fils de trame t100, t110 et t120. Dans la figure 5C, on retire une demi-couche de la couche t110 pour ne laisser dans la structure S4 que la demi-couche t'110. Dans les figures 5D à 5H, on retire la demi-couche t'110 pour ne laisser que les 2 couches t100 et t120 dans la structure S4.

Dans les plans représentés sur les figures 5A à 5F, les couches ou demi-couches de fils de trame sont tissées avec trois fils de chaîne 100, 110, 120, les fils de chaîne 100 et 120 étant tissés suivant une armure de type satin et le fil de chaîne 110 étant tissé suivant une armure de type interlock.

Le fil de chaîne 100 est un fil à titre variable formé d'un assemblage séparable de quatre fils unitaires 101 à 104 ayant chacun un titre de 12K. Les fils de chaîne 110 et 120 sont des fils à titre variable formés chacun d'un assemblage séparable de deux fils unitaires 111 et 112, respectivement 121 et 122, ayant chacun un titre de 24K.

Dans la figure 5D, le fil unitaire 101 du fil à titre variable 100 est extrait de la structure S4, le tissage étant poursuivi avec les trois autres fils unitaires 102, 103 et 104 de 12K chacun.

Dans la figure 5E, le fil unitaire 111 du fil à titre variable 110 est extrait de la structure S4, le tissage étant poursuivi avec l'autre fil unitaire 112 de 24k.

Dans la figure 5F, le fil unitaire 121 du fil à titre variable 120 est extrait de la structure S4, le tissage étant poursuivi avec l'autre fil unitaire 122 de 24k.

Dans la figure 5G, le fil unitaire 112 est extrait de la structure S4 si bien qu'il ne reste plus de fil unitaire issu du fil à titre variable 110. Le tissage à coeur du fil unitaire 112 est poursuivi par les fils unitaires 103 et 104 de 12K chacun tandis que le tissage en peau est poursuivi par le fil unitaire 102 de 12K.

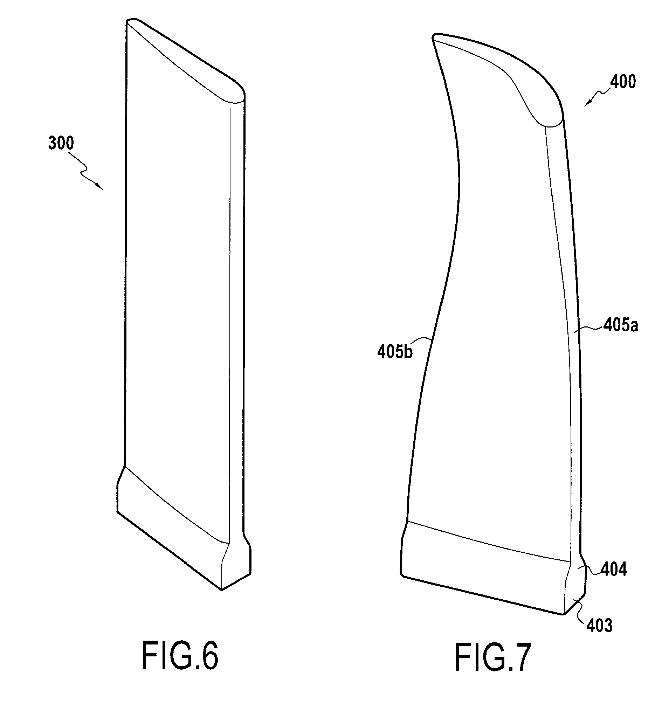

Une fois le tissage de la structure fibreuse achevé, on découpe les fils non tissés et notamment ceux qui ont été extraits de la texture au niveau des parties de retrait en continuité et en discontinuité de surface. On obtient alors la préforme fibreuse 300 illustrée sur la figure 6 et tissée en une seul pièce.

On procède ensuite à la densification de la préforme fibreuse 300 afin de former une aube 10 en matériau composite illustrée sur la figure 7. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou encore suivant un enchaînement de ces deux procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Deposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

Après densification, on obtient une aube 400 en matériau composite qui, comme illustrée sur la figure 7, comporte dans sa partie inférieure un pied 403 formé par la surépaisseur 203 de la structure fibreuse 200 qui se prolonge par une échasse 404 formée par la portion d'épaisseur décroissante 204 de la structure 200 et une pale 405 formée par la partie 205 de la structure fibreuse 200 et s'étendant perpendiculairement par rapport à la direction longitudinale de l'aube entre un bord d'attaque 405a et un bord de fuite 405b.

## Revendications

1. Structure fibreuse de renfort (S1) de pièce en matériau composite, ladite structure étant tissée en une seule pièce par tissage multicouche entre une première pluralité de couches (10, 20, 30) de fils s'étendant dans une première direction et une deuxième pluralité de couches (t10, t20, t30) de fils s'étendant dans une seconde direction,
**caractérisée en ce qu'**au moins une des première et deuxième pluralités de couches de fils comprend au moins une couche (10) de fils à titre variable, chaque fil à titre variable étant formé d'un assemblage séparable de fils unitaires (11, 12) ayant chacun un titre déterminé,
et **en ce que** la structure fibreuse comprend au moins une portion d'épaisseur réduite (2H) dans laquelle les fils à titre variable présentent un titre inférieur à celui présenté par lesdits fils à titre variable avant ladite portion d'épaisseur réduite.

2. Structure selon la revendication 1, caractérisée en que le titre de chaque fil unitaire (11, 12) d'un fil à titre variable est un diviseur du titre dudit fil à titre variable.

3. Structure selon la revendication 1 ou 2, **caractérisé en ce que** les fils (10) à titre variable sont des fils assemblés.

4. Structure selon l'une quelconque des revendications 1 à 3, **caractérisée en ce que** chaque fil (10) à titre variable a un titre initial de 48k et **en ce qu'**il est formé par un des assemblages séparables de fils (11, 12) unitaires suivants :
- deux fils unitaires ayant chacun un titre de 24k,
- trois fils unitaires dont un a un titre de 24k et les deux autres ont un titre de 12k, et
- quatre fils ayant chacun un titre de 12k.

5. Structure selon l'une quelconque des revendications 1 à 4, **caractérisé en ce que**, dans la portion (2H) d'épaisseur réduite, la structure fibreuse comprend trois couches (10, 20, 30) de la première pluralité de couches de fils et deux couches (t10,t20) de la deuxième pluralité de couches de fils.

6. Structure selon l'une quelconque des revendications 1 à 5, **caractérisée en ce que** la portion d'épaisseur réduite comprend au moins une zone à partir de laquelle une couche de la première ou deuxième pluralité de couches de fils est interrompue, ladite couche de fils interrompue étant remplacée dans la suite de la portion d'épaisseur réduite par des fils unitaires d'une couche de fils à titre variable adjacente à ladite couche interrompue.

7. Pièce en matériau composite comprenant un renfort fibreux densifié par une matrice résine dans laquelle le renfort fibreux est formé par une structure fibreuse selon l'une quelconque des revendications 1 à 6 densifiée par une matrice.

8. Pièce selon la revendication 7, **caractérisée en ce qu'**elle constitue une aube (400) de moteur aéronautique.

9. Pièce selon la revendication 8, **caractérisée en ce que** la portion d'épaisseur réduite de la structure fibreuse correspond à la partie du renfort fibreux formant le bord de fuite de l'aube. (400)

10. Turbopropulseur comprenant une pluralité d'aube (400) selon la revendication 9.

11. Aéronef équipé d'au moins un turbopropulseur selon la revendication 10.

12. Procédé de fabrication d'une structure fibreuse (S1) de renfort de pièce en matériau composite comprenant le tissage par tissage multicouche entre une première pluralité de couches (10, 20, 30) de fils s'étendant dans une première direction et une deuxième pluralité de couches (t10, t20, t30) de fils s'étendant dans une seconde direction,
**caractérisé en ce qu'**au moins une des première et deuxième pluralités de couches de fils comprend au moins une couche (10) de fils à titre variable, chaque fil à titre variable étant formé d'un assemblage séparable de fils (11, 12) unitaires ayant chacun un titre déterminé,
et **en ce que** le procédé comprend en outre la diminution du titre des fils (10) à titre variable lors du tissage d'une portion (2H) d'épaisseur réduite de la structure fibreuse.

13. Procédé selon la revendication 12, **caractérisé en ce que**, lors du tissage de la portion d'épaisseur réduite, une couche de la première ou deuxième pluralité de couches de fils est interrompue et **en ce que** ladite couche de fils interrompue est remplacée dans la suite de la portion d'épaisseur réduite par des fils unitaires d'une couche de fils à titre variable adjacente à ladite couche interrompue.

## Patentansprüche

1. Verstärkungsfaserstruktur (S1) eines Verbundwerkstoffteils, wobei die Struktur durch Mehrlagenweben zwischen einer ersten Vielzahl von Lagen (10, 20, 30) aus Fäden, die sich in einer ersten Richtung erstrecken, und einer zweiten Vielzahl von Lagen (t10, t20, t30) aus Fäden, die sich in einer zweiten Richtung erstrecken, aus einem einzigen Stück gewebt ist,
**dadurch gekennzeichnet, dass** wenigstens eine der ersten und der zweiten Vielzahl von Fadenlagen wenigstens eine Lage (10) aus Fäden mit variabler Nummer umfasst, wobei jeder Faden mit variabler Nummer von einer trennbaren Anordnung aus Einzelfäden (11, 12), die jeweils eine bestimmte Nummer aufweisen, gebildet ist,
und dass die Faserstruktur wenigstens einen Abschnitt mit reduzierter Dicke (2H) umfasst, in dem die Fäden mit variabler Nummer eine Nummer aufweisen, die kleiner als diejenige ist, welche die Fäden mit variabler Nummer vor dem Abschnitt mit reduzierter Dicke aufweisen.

2. Struktur nach Anspruch 1, **dadurch gekennzeichnet, dass** die Nummer eines jeden Einzelfadens (11, 12) eines Fadens mit variabler Nummer ein Teiler der Nummer des Fadens mit variabler Nummer ist.

3. Struktur nach Anspruch 1 oder 2, **dadurch gekennzeichnet, dass** die Fäden (10) mit variabler Nummer gefachte Fäden sind.

4. Struktur nach einem der Ansprüche 1 bis 3, **dadurch gekennzeichnet, dass** jeder Faden (10) mit variabler Nummer eine Ausgangsnummer von 48k aufweist und dass er durch eine der folgenden trennbaren Anordnungen von Einzelfäden (11, 12) gebildet ist:
- zwei Einzelfäden mit jeweils einer Nummer von 24k,
- drei Einzelfäden, von denen einer eine Nummer von 24k aufweist und die beiden anderen eine Nummer von 12k aufweisen, und
- vier Fäden mit jeweils einer Nummer von 12k.

5. Struktur nach einem der Ansprüche 1 bis 4, **dadurch gekennzeichnet, dass** die Faserstruktur in dem Abschnitt (2H) mit reduzierter Dicke drei Lagen (10, 20, 30) der ersten Vielzahl von Fadenlagen und zwei Lagen (t10, t20) der zweiten Vielzahl von Fadenlagen umfasst.

6. Struktur nach einem der Ansprüche 1 bis 5, **dadurch gekennzeichnet, dass** der Abschnitt mit reduzierter Dicke wenigstens einen Bereich umfasst, ab dem eine Lage der ersten oder zweiten Vielzahl von Fadenlagen unterbrochen ist, wobei die unterbrochene Fadenlage in der Fortsetzung des Abschnitts mit reduzierter Dicke durch Einzelfäden einer Lage aus Fäden mit variabler Nummer, die zu der unterbrochenen Lage benachbart ist, ersetzt ist.

7. Verbundwerkstoffteil, umfassend eine durch eine Harzmatrix verdichtete Faserverstärkung, bei dem die Faserverstärkung durch eine Faserstruktur nach einem der Ansprüche 1 bis 6 , welche durch eine Matrix verdichtet ist, gebildet ist.

8. Teil nach Anspruch 7, **dadurch gekennzeichnet, dass** es eine Schaufel (400) eines Luftfahrttriebwerks darstellt.

9. Teil nach Anspruch 8, **dadurch gekennzeichnet, dass** der Abschnitt mit reduzierter Dicke der Faserstruktur dem die Austrittskante der Schaufel (400) bildenden Teil der Faserverstärkung entspricht.

10. Turboprop-Triebwerk, das eine Vielzahl von Schaufeln (400) nach Anspruch 9 umfasst.

11. Luftfahrzeug, das mit wenigstens einem Turboprop-Triebwerk nach Anspruch 10 ausgestattet ist.

12. Verfahren zur Herstellung einer Faserstruktur (S1) zur Verstärkung eines Verbundwerkstoffteils, umfassend das Weben durch Mehrlagenweben zwischen einer ersten Vielzahl von Lagen (10, 20, 30) aus Fäden, die sich in einer ersten Richtung erstrecken, und einer zweiten Vielzahl von Lagen (t10, t20, t30) aus Fäden, die sich in einer zweiten Richtung erstrecken,
**dadurch gekennzeichnet, dass** wenigstens eine der ersten und der zweiten Vielzahl von Fadenlagen wenigstens eine Lage (10) aus Fäden mit variabler Nummer umfasst, wobei jeder Faden mit variabler Nummer von einer trennbaren Anordnung aus Einzelfäden (11, 12), die jeweils eine bestimmte Nummer aufweisen, gebildet ist,
und dass das Verfahren ferner die Verringerung der Nummer der Fäden (10) mit variabler Nummer während des Webens eines Abschnitts (2H) mit reduzierter Dicke der Faserstruktur umfasst.

13. Verfahren nach Anspruch 12, **dadurch gekennzeichnet, dass** während des Webens des Abschnitts mit reduzierter Dicke eine Lage der ersten oder zweiten Vielzahl von Fadenlagen unterbrochen wird und dass die unterbrochene Fadenlage in der Fortsetzung des Abschnitts mit reduzierter Dicke durch Einzelfäden einer Lage aus Fäden mit variabler Nummer, die zu der unterbrochenen Lage benachbart ist, ersetzt wird.

## Claims

1. A fiber structure (S1) for reinforcing a composite material part, said structure being woven as a single piece by multilayer weaving between a first plurality of layers (10, 20, 30) of yarns extending in a first direction and a second plurality of layers (t10, t20, t30) of yarns extending in a second direction,
wherein at least one of the first and second pluralities of layers of yarns includes at least one layer (10) of yarns of variable weight, each variable-weight yarn being made up of a separable assembly of individual yarns (11, 12) each having a determined weight; and
wherein the fiber structure includes at least one portion of reduced thickness (2H) in which the variable-weight yarns present weight that is less than the weight presented by said variable-weight yarns prior to said portion of reduced thickness.

2. A structure according to claim 1, wherein the weight of each individual yarn (11, 12) of a variable-weight yarn is a divisor of the weight of said variable-weight yarn.

3. A structure according to claim 1 or 2, wherein the variable-weight yarns (10) are assembled yarns.

4. A structure according to any one of claims 1 to 3, wherein each variable-weight yarn (10) has an initial weight of 48K and is made up of one of the following separable assemblies of individual yarns (11, 12):
· two individual yarns, each weighing 24K;
· three individual yarns comprising one weighing 24K and two others, each weighing 12K; and
· four yarns, each weighing 12K.

5. A structure according to any one of claims 1 to 4, wherein, in the portion of reduced thickness (2H), the fiber structure has three layers (10, 20, 30) of the first plurality of layers of yarns and two layers (t10, t20) of the second plurality of layers of yarns.

6. A structure according to any one of claims 1 to 5, wherein the portion of reduced thickness includes at least one zone starting from which a layer of the first or second plurality of layers of yarns is interrupted, said interrupted layer of yarns being replaced thereafter in the portion of reduced thickness by individual yarns of a layer of variable-weight yarns adjacent to said interrupted layer.

7. A composite material part comprising fiber reinforcement densified by a resin matrix in which the fiber reinforcement is formed by a fiber structure according to any one of claims 1 to 6 and densified by a matrix.

8. A part according to claim 7, **characterized in that** it constitutes an aeroengine blade (400).

9. A part according to claim 8, **characterized in that** the reduced thickness portion of the fiber structure corresponds to the portion of the fiber reinforcement that forms the trailing edge of the blade (400).

10. A turboprop including a plurality of blades (400) according to claim 9.

11. An aircraft fitted with at least one turboprop according to claim 10.

12. A method of fabricating a fiber structure (S1) for reinforcing a composite material part, said method including weaving a fiber structure as a single piece by multilayer weaving between a first plurality of layers (10, 20, 30) of yarns extending in a first direction and a second plurality of layers (t10, t20, t30) of yarns extending in a second direction,
wherein at least one of the first and second pluralities of layers of yarns includes at least one layer (10) of yarns of variable weight, each variable-weight yarn being made up of a separable assembly of individual yarns (11, 12) each having a determined weight; and
wherein said method further includes reducing weight of variable-weight yarn (10) during weaving of at least one portion of reduced thickness (2H) in the fiber structure.

13. A method according to claim 12, wherein, during weaving of the reduced thickness in the fiber structure, a layer of the first or second plurality of layers of yarns is interrupted, said interrupted layer of yarns being replaced thereafter in the portion of reduced thickness by individual yarns of a layer of variable-weight yarns adjacent to said interrupted layer.
